# EUROPÄISCHE PATENTSCHRIFT

(11) **EP 3 857 577 B1**
(45) Veröffentlichungstag und Bekanntmachung des Hinweises auf die Patenterteilung: **27.09.2023**
(21) Anmeldenummer: 18815544.4
(22) Anmeldetag: 26.11.2018
(51) Int. Cl.: H01F 29/14, H02J 3/18, H02P 13/12

(54) **VORRICHTUNG ZUR BLINDLEISTUNGSKOMPENSATION MIT EINER HOCHSPANNUNGSWICKLUNG MIT MITTENANSCHLUSS**
DEVICE FOR REACTIVE POWER COMPENSATION WITH A HIGH VOLTAGE WINDING WITH CENTER CONNECTION
DISPOSITIF DE COMPENSATION DE PUISSANCE RÉACTIVE AVEC UN ENROULEMENT HAUTE TENSION À CONNEXION CENTRALE

(43) Veröffentlichungstag der Anmeldung: 04.08.2021
(73) Patentinhaber: Siemens Energy Global GmbH & Co. KG, 81739 München (DE)
(72) Erfinder: BUNIN, Anatoliy, 90547 Stein (DE); KOCZULA, Carsten, 90478 Nürnberg (DE); MANTHE, Thomas, 17373 Ueckermünde (DE); KÜSTERMANN, Matthias, 90408 Nürnberg (DE)
(86) Internationale Anmeldenummer: PCT/EP2018/082577
(87) Internationale Veröffentlichungsnummer: WO 2020/108732

(56) Entgegenhaltungen:
- EP-A1- 3 168 708
- DE-U1-202013 004 706

## Beschreibung

Die Erfindung betrifft eine Vorrichtung zur Blindleistungskompensation in einem wenigstens einen Phasenleiter aufweisenden Hochspannungsnetz. Die Vorrichtung weist für jeden Phasenleiter einen Hochspannungsanschluss auf. Für jeden Hochspannungsanschluss wiederum sind, als Teil der Vorrichtung, ein erster und ein zweiter Kernabschnitt, die Teil eines geschlossenen Magnetkreises sind, eine erste Hochspannungswicklung, die den ersten Kernabschnitt umschließt, eine zweite Hochspannungswicklung, die den zweiten Kernabschnitt umschließt und parallel zur ersten Hochspannungswicklung geschaltet ist, wenigstens ein Sättigungsschaltzweig, der zum Sättigen wenigstens eines Kernabschnittes eingerichtet ist und ansteuerbare Leistungshalbleiterschalter aufweist, und eine Steuerungseinheit zum Ansteuern der Leistungshalbleiterschalter vorgesehen.

Eine solche Vorrichtung ist aus der EP 3 168 708 A1 bereits bekannt. Dort ist ein so genannter "Full Variable Shunt Reactor" (FVSR) offenbart. Die vorbekannte Vorrichtung verfügt über zwei einander parallel geschaltete Hochspannungswicklungen je Phase, die jeweils einen Kernschenkel eines geschlossenen Eisenkerns umschließen und an ihrem Hochspannungsende an einen Phasenleiter eines Hochspannungsnetzes angeschlossen sind. Die Niederspannungsseiten der Hochspannungswicklungen sind mit Hilfe eines Transistorschalters entweder mit einem zweckmäßig polarisierten Umrichter oder direkt mit einem Erdanschluss verbindbar. Der Umrichter ist zum Erzeugen eines Gleichstroms in der mit ihm verbundenen Hochspannungswicklung eingerichtet. Dabei wird der Gleichstrom so eingestellt, dass der von der Wicklung umschlossene Kernschenkel in einen gewünschten Sättigungszustand getrieben wird. In diesem Sättigungszustand weist das Kernmaterial beispielsweise eine sehr kleine magnetische Permeabilität auf, wodurch sich der magnetische Widerstand der Wicklung erhöht und deren Induktivität abgesenkt wird. Die Sättigung der besagten Kernabschnitte ist polarisationsabhängig, so dass ein über die Wicklungen fließender Wechselstrom je nach seiner Polarisierung im Wesentlichen nur über eine der beiden Hochspannungswicklungen fließt. So fließt beispielsweise ein positiver Wechselstrom über die erste Hochspannungswicklung während ein negativer Wechselstrom über die zweite Hochspannungswicklung zur Erde hin abfließt. Wird der Strom nur über eine Hochspannungswicklung getrieben, kann die jeweils andere Wicklung, die gerade nicht vom Wechselstrom durchströmt wird, mit einem Gleichstrom beaufschlagt werden, um den von ihr umschlossenen Kernschenkel in dem gewünschten Maß zu sättigen.

Magnetisch gesteuerte Drosselspulen sind ferner aus der DE 20 2013 004 706 U1 und der DE 10 2012 110 969 bekannt.

Der vorbekannten Vorrichtung haftet der Nachteil an, dass die bei Betrieb auf eine Hochspannungspotential liegenden Hochspannungswicklungen einen großen Abstand zu dem auf Erdpotential liegenden Kern aufweisen müssen, um die geforderte Spannungsfestigkeit bereit zu stellen. Dieser große Abstand hat zur Folge, dass sich das von der Hochspannungswicklung erzeugte Streufeld stärker ausbildet und Teile des Aktivteils wie beispielsweise den Pressrahmen, die Durchführungen, den Tank oder die Ausleitungen durchsetzt, wodurch unerwünschte Verluste entstehen und die besagten Teile erwärmt werden. Aufgabe der Erfindung ist es, eine Vorrichtung der eingangs genannten Art bereitzustellen, die geringere Streufeldverluste aufweist.

Die Erfindung löst diese Aufgabe dadurch, dass wenigstens eine genannte Hochspannungswicklung einen Mittenanschluss aufweist und an ihren Wicklungsende mit dem Sättigungsschaltzweig und über den Mittenanschluss mit dem Hochspannungsanschluss verbunden ist.

Die erfindungsgemäße Vorrichtung weist wenigstens eine Hochspannungswicklung mit einem Mittenanschluss auf. Der Mittenanschluss ist mit dem jeweils zugeordneten Hochspannungsanschluss verbunden. Bevorzugt sind beide Hochspannungswicklungen, die dem gleichen Hochspannungsanschluss zugeordnet sind, mit einem Mittenanschluss versehen und über diesen mit dem Hochspannungsanschluss verbunden. Somit sind alle Hochspannungswicklungen der erfindungsgemäßen Vorrichtung über ihren Mittenanschluss mit dem Hochspannungsanschluss verbunden. Die Wicklungsenden sind hingegen mit dem Sättigungsschaltzweig verbunden. Somit liegen die Wicklungsenden, die dem oberen beziehungsweise unteren Joch des Kerns zugewandt sind, auf einem niedrigeren elektrischen Potential als bei einer vergleichbaren Vorrichtung gemäß dem Stand der Technik. Der Abstand Xₒ, Xₙ der Enden der oder jeder Hochspannungswicklungen zu dem oberen bzw. unterem Joch kann somit verringert werden. Dies reduziert das magnetische Streufeld und verringert folglich die Streufeldverluste.

Die erfindungsgemäße Vorrichtung ist darüber hinaus auch kompakt und somit leichter als eine vorbekannte Vorrichtung, die für gleiche Leistungen und Betriebsspannungen ausgelegt ist.

Der Begriff "Mittenanschluss" ist dem Fachmann zwar bekannt. Zur Klarstellung sei jedoch ausgeführte, dass hier unter einem Mittenanschluss zu verstehen ist, dass eine Wicklung, die sich in Längsrichtung erstreckt und in dieser Längsrichtung übereinander liegende helixförmig gewickelte Windungen, Windungspakete oder Spulen aufweist, an einer in Längsrichtung mittig liegenden Windung, Wicklungspaket oder Spule mit einem Anschluss ausgerüstet ist, der hier als Mittenanschluss bezeichnet ist. Die mittige Windung, das mittige Wicklungspaket oder die mittige Spule die mit dem Mittenanschluss verbunden ist oder diesen ausbildet, muss im Rahmen der Erfindung jedoch nicht ganz genau in der Längsmitte der Hochspannungswicklung liegen. Vielmehr sind im Rahmen der Erfindung Abweichungen hiervon möglich.

Vorzugsweise sind der erste und der zweite Kernabschnitt über ein oberes und ein unteres Joch miteinander verbunden, wobei die Abstände Xₒ und Xᵤ zwischen dem oberen und unteren Joch und dem ersten beziehungsweise zweiten Wicklungsende der mit Mittenanschluss ausgerüsteten Hochspannungswicklung(en) im Bereich von 1 bis 20 cm liegen. Dieser Bereich hat sich für die Abstände als besonders günstig herausgestellt.

Gemäß einer bevorzugten Variante der Erfindung ist jede Hochspannungswicklung und jeder Sättigungsschaltzweig in einem mit einem Isolierfluid befüllten Tank angeordnet. Gemäß einer Variante sind Hochspannungswicklungen und Sättigungsschaltzweig in dem gleichen Tank angeordnet. Im Rahmen der Erfindung ist es jedoch auch möglich, dass die Hochspannungswicklungen und die Leistungselektronik des Sättigungsschaltzweiges in unterschiedlichen Tanks oder Gehäusen angeordnet sind. Dabei sind beide Gehäuse mit einem Isolierfluid befüllt, wobei Durchführungen vorgesehen sind, um die elektrische Verbindung der in dem Tank angeordneten Komponenten miteinander zu ermöglichen. Als Isolierfluid kommt beispielsweise ein mineralisches Öl, ein Ester oder dergleichen in Betracht. Es können unterschiedliche Isolierfluide in verschiedenen Tanks vorgesehen sein. Bevorzugt ist jedoch das Isolierfluid in allen Tanks das gleiche. Das Isolierfluid kann abweichend davon auch als Schutzgas ausgeführt sein.

Vorzugsweise verfügt jeder Sättigungsschaltzweig über wenigstens ein zweipoliges Submodul mit einer Brückenschaltung, die über Leistungshalbleiterschalter und eine Gleichspannungsquelle verfügt, so dass je nach Ansteuerung der Leistungshalbleiterschalter die Gleichspannungsquelle entweder in Reihe zu wenigstens einer Hochspannungswicklung schaltbar oder überbrückbar ist. Die Gleichspannungsquelle stellt bei zweckmäßiger Ansteuerung der Leistungshalbleiterschalter dann die notwenigen Spannungen und Gleichströme zum Sättigen des Kernschenkels der Hochspannungswicklungen bereit.

Bevorzugt ist jedes Submodul als Vollbrückenschaltung ausgebildet, die einen ersten Reihenschaltungszweig und einen zweiten Reihenschaltungszweig aufweist, die der Gleichspannungsquelle jeweils parallelgeschaltet sind. Jeder Reihenschaltungszweig weist eine Reihenschaltung aus zwei Leistungshalbleiterschaltern auf, wobei der Potenzialpunkt zwischen den Leistungshalbleiterschaltern des ersten Reihenschaltungszweiges mit einer ersten Anschlussklemme des Submoduls und der Potenzialpunkt zwischen den Leistungshalbleiterschaltern des zweiten Reihenschaltungszweigs mit der zweiten Anschlussklemme des Submoduls verbunden ist. Vollbrückenschaltungen ermöglichen eine Polarisationsumkehr an den Anschlussklemmen, die mit einer so genannten Halbbrückenschaltung, die lediglich einen Parallelzweig mit zwei Leistungshalbleiterschaltern aufweist, nicht möglich ist.

Bevorzugt ist jeder Leistungshalbleiterschalter ein IGBT mit gegensinnig parallel geschalteter Freilaufdiode, ein so genannter GTO oder ein Transistorschalter. Vorteilhaft ist im Rahmen der Erfindung, dass jeder Leistungshalbleiterschalter sowohl von seiner Unterbrecherstellung, in der ein Stromfluss über den Leistungshalbleiterschalter nicht möglich ist, in seine Durchlassstellung oder umgekehrt überführbar ist, in der ein Stromfluss über den Leistungshalbleiterschalter ermöglicht ist. Solche Leistungshalbleiterschalter werden auch abschaltbare Leistungshalbleiterschalter genannt, die sogar einen über sie fließenden Kurzschlussstrom unterbrechen können, wenn geeignete Maßnahme getroffen wurden, um die dabei entstehenden Energien abzubauen.

Bevorzugt ist jede Gleichspannungsquelle ein Energiespeicher. Als Energiespeicher kommen beispielsweise elektrische Energiespeicher in Betracht, die vorzugsweise unipolar sind. So kommen als Energiespeicher beispielsweise Kondensatoren, Superkondensatoren, supraleitende Spulen, Batterieakkumulatoren, Supercaps oder dergleichen in Betracht. Die aufgezählten oder andere Energiespeicher können in einem Submodul einzeln auftauchen oder aber mehrere von ihnen sind in Reihe geschaltet. Auf diese Reihen- und/oder Parallelschaltung wird im Rahmen der hier vorliegenden Erfindung mit dem Begriff "Energiespeicher" insgesamt Bezug genommen.

Zweckmäßigerweise ist der Energiespeicher mit einer Ladeeinheit zum Aufladen des Energiespeichers verbunden. Bevorzugt ist der Energiespeicher an ein Versorgungsnetz anschließbar. Dies erfolgt zweckmäßigerweise über eine Ladeeinheit, die im Rahmen der Erfindung grundsätzlich beliebig ausgestaltet sein kann. Wesentlich ist jedoch, dass über die Ladeeinheit dem Versorgungsnetz Energie entnommen und in dem Energiespeicher gespeichert werden kann. Diese Energie ermöglicht dann den Stromfluss zur Sättigung der jeweiligen Hochspannungswicklung.

Zweckmäßigerweise sind Ausgleichswicklungen vorgesehen, die induktiv mit den Hochspannungswicklungen gekoppelt sind, wobei die Zusatzwicklungen mit wenigstens einem kapazitiv wirkenden Bauteil verschaltet sind. Die Ausgleichswicklungen sind im Rahmen der Erfindung mit wenigstens einer der Hochspannungswicklungen induktiv gekoppelt. Dabei sind die Ausgleichswicklungen mit einem kapazitiv wirkenden Bauteil verschaltet. Mit dem Begriff "verschaltet" ist gemeint, dass jedes kapazitiv wirkende Bauteil galvanisch entweder direkt oder über ein elektrisches Bauteil, wie beispielsweise eine Schalteinheit mit wenigstens einer der Ausgleichswicklungen verbunden ist. Das kapazitive Bauteil, beispielsweise ein Kondensator oder eine mit Kondensatoren ausgerüstete "Flexible AC Transmission System" (FACTS) - Komponente, wie beispielsweise ein "Static Synchronous Compensator" (STATCOM), kann so Einfluss auf den Grad und Richtung der Blindleistungskompensation nehmen. Dabei kann die Steuerungseinheit die Leistungshalbleiterschalter des FVSR so ansteuern, dass der induktive Effekt der Hochspannungswicklung bei der Blindleistungskompensation nahezu vollständig zurückgefahren wird, so dass lediglich das kapazitive Bauteil seine Wirkung entfaltet und zu einer in Summe kapazitiven Blindleistungskompensation beiträgt. Abweichend hiervon kann die Steuerungseinheit dafür sorgen, dass die induktive Wirkung der Hochspannungswicklungen vollständig zur Wirkung kommt, so dass die Wirkung des kapazitiven Bauteils überlagert wird, so dass in Summe eine induktive Blindleistungskompensation erfolgt.

Zweckmäßigerweise ist das kapazitive Bauteil ein Kondensator oder eine Kondensatorbatterie.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleichwirkende Bauteile verweisen und wobei
- Figur 1: ein Ausführungsbeispiel der erfindungsgemäßen Vorrichtung,
- Figur 2: eine der Hochspannungswicklungen mit den ihr zugeordneten Kernabschnitten der Vorrichtung gemäß Figur 1,
- Figur 3: die Submodule eines Sättigungsschaltzweiges der Vorrichtung gemäß Figur 1 genauer und
- Figur 4: ein weiteres Ausführungsbeispiel der Erfindung in einer schematischen Darstellung zeigen.

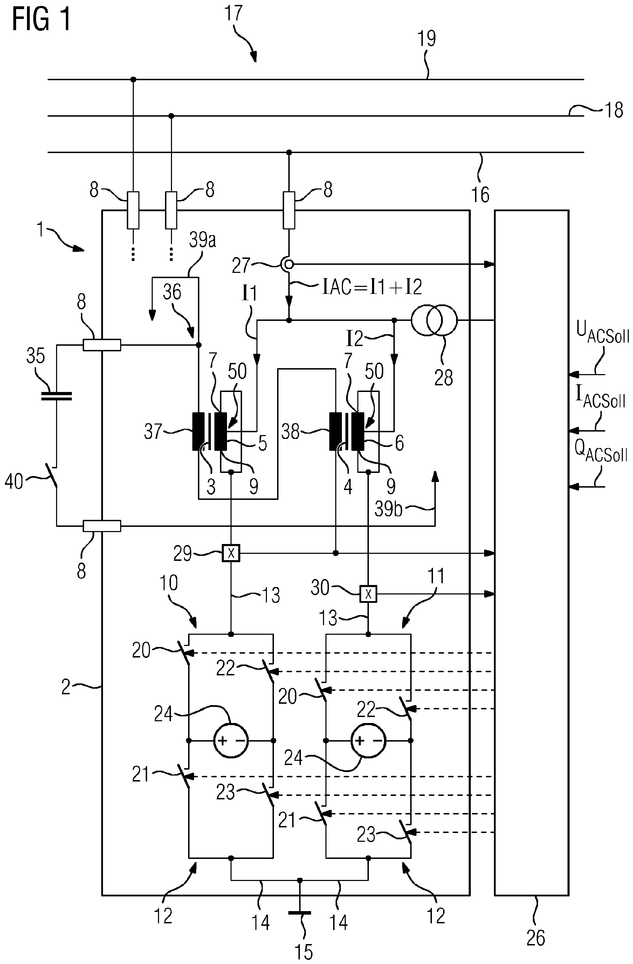

Figur 1 zeigt ein Ausführungsbeispiel der erfindungsgemäßen Vorrichtung 1, die einen mit einem Isolierfluid befüllten Tank 2 aufweist. Als Isolierfluid kommen mineralische Öle, aber auch Esterflüssigkeiten oder dergleichen in Betracht. Das Isolierfluid stellt zum einen die notwendige Spannungsfestigkeit für Bauteile der Vorrichtung 1, die auf einem Hochspannungspotenzial liegen, gegenüber dem Tank 2 auf Erdpotenzial bereit. Darüber hinaus dient das Isolierfluid zur Kühlung der beim Betrieb Wärme entwickelnden Komponenten.

Innerhalb des Tanks 2 ist ein Kern angeordnet, der aus einem magnetisierbaren Material, hier flächig aneinander anliegenden Eisenblechen, zusammengesetzt ist, und einen ersten Kernschenkel 3 sowie einen zweiten Kernschenkel 4 als Kernabschnitte ausbildet. Der erste Kernschenkel 3 ist von einer ersten Hochspannungswicklung 5 umschlossen. Der zweite Kernschenkel 4 ist von einer zweiten Hochspannungswicklung 6 umgeben. Zur Ausbildung eines geschlossenen Magnet- oder Eisenkreises dienen figürlich nicht dargestellte Joche, die sich von dem oberen Ende des ersten Kernschenkels 3 zum oberen Ende des zweiten Kernschenkels 4 sowie vom unteren Ende des Kernschenkels 3 zum unteren Ende des Kernschenkels 4 erstrecken. In Figur 1 sind die bewickelten Kernschenkel 3 und 4 für eine Phase gezeigt. Für die beiden anderen Phasen des Hochspannungsnetzes sind jeweils zwei weitere bewickelte nicht dargestellte Kernschenkel im dem Tank 2 angeordnet, die über die Joche miteinander verbunden sind. Darüber hinaus sind zwei figürlich ebenfalls nicht dargestellte Rückflussschenkel vorgesehen, die von keiner Wicklung umschlossen sind und sich rechts und links parallel zu den Kernschenkeln 3 beziehungsweise 4 erstrecken. Mit anderen Worten ist bei der in Figur 1 beschriebenen einphasigen Ausführung des FVSR ein so genannter 6/2-Kern bereitgestellt. Abweichend hiervon kann die erfindungsgemäße Vorrichtung 1 für jede Phase einen Tank 2 aufweisen. In jedem einphasigen Tank 2 wäre dann ein 2/2 Kern mit zwei bewickelten Kernschenkeln 3 und 4 sowie 2 nicht bewickelten Rückflussschenkeln angeordnet.

Die erste Hochspannungswicklung 5 und die zweite Hochspannungswicklung 6 weisen jeweils ein erstes Ende 7 und ein zweites Ende 9 auf. Ferner ist jede Hochspannungswicklung 5 und 6 mit einem Mittenanschluss 50 ausgerüstet. Ferner sind Hochspannungsanschlüsse 8 erkennbar, wobei für jede Phase ein Hochspannungsanschluss vorgesehen ist. Ist die Vorrichtung 1 in einem mit Isolierfluid befüllten Tank 2 angeordnet, ist der Hochspannungsanschluss 8 beispielsweise als Durchführung ausführt. Die Durchführung durchgreift die Tankwand und ist an ihrem freien, außerhalb des Kessels angeordneten Ende mit einem Freiluftanschluss ausgerüstet. Der figürlich nicht dargestellte Freiluftanschluss dient zum Anschluss eines luftisolierten Leiters. An ihrem ersten und zweiten Ende 7, 9, die miteinander verbunden sind, sind die erste Hochspannungswicklung 5 und die zweite Hochspannungswicklung 6 mit einem Sättigungsschaltzweig 10 beziehungsweise 11 verbunden, wobei jeder Sättigungsschaltzweig 10, 11 ein zweipoliges Submodul 12 aufweist, das mit einer ersten Anschlussklemme 13 mit der jeweiligen Hochspannungswicklung 5 beziehungsweise 6 und mit einer zweiten Anschlussklemme 14 mit einem gemeinsamen Potenzialpunkt 15 verbunden ist. Der Potenzialpunkt 15 ist in dem gezeigten Ausführungsbeispiel geerdet. Mit anderen Worten sind die Hochspannungswicklungen 5 und 6 einander parallelgeschaltet oder zumindest schaltbar.

Über den Hochspannungsanschluss 8 sind die Hochspannungswicklungen 5 und 6 mit einem Phasenleiter 16 eines Hochspannungsnetzes 17 verbunden, wobei das Hochspannungsnetz 17 zwei weitere Phasenleiter 18 und 19 aufweist, die jeweils wieder über einen Hochspannungsanschluss 8 mit zwei Hochspannungswicklungen und zwei Sättigungsschaltzweigen verbunden sind. Mit anderen Worten weist die Vorrichtung 1 für jede Phase 16, 18, 19 des Hochspannungsnetzes 17 einen identischen Aufbau auf, wobei hier aus Gründen der Übersicht lediglich der Aufbau für einen Phasenleiter 16 gezeigt ist.

Wesentlich für den hier gezeigten Full Variable Shunt Reactor (FVSR) ist, dass jeder Sättigungsschaltzweig 10 beziehungsweise 11, ein zweipoliges Submodul 12 aufweist, das über eine Brückenschaltung aus Leistungshalbleiterschaltern 20, 21, 22 und 23 und eine Gleichspannungsquelle 24 verfügt, die bevorzugt unipolar ausgebildet ist und somit einen festen Plus- und einen festen Minuspol aufweist.

Die Brückenschaltung kann im Rahmen der Erfindung eine Halbrücke oder eine Vollbrücke sein. In Figur 1 verfügt jedes Submodul über eine Vollbrücke mit vier Leistungshalbleiterschaltern 20, 21, 22, 23. Eine Halbbrücke umfasst lediglich zwei Leistungshalbleiterschalter. Zum zweckmäßigen Ansteuern der vier Leistungshalbleiterschalter 20, 21, 22 und 23 ist eine Steuerungseinheit 26 vorgesehen, die eingangsseitig mit Sollwerten für die Spannung UACₛₒₗₗ, den Wechselstrom IACₛₒₗₗ und die Blindleistung QACₛₒₗₗ versorgt werden kann. Zum Erfassen des von dem Phasenleiter 16 zu den Hochspannungswicklungen 5 und 6 fließenden Wechselstromes IAC dient ein Stromsensor 27, wobei ein Spannungssensor 28 die hochspannungsseitig der Hochspannungswicklung 5 und 6 abfallende Spannung erfasst. Der Stromsensor 27 und der Spannungssensor 28 sind über figürlich nicht dargestellte Signalleitungen mit der Steuerungseinheit 26 verbunden. An dem ersten Ende 9 der Hochspannungswicklung 5 beziehungsweise 6 sind ebenfalls Sensoren 29 und 30 erkennbar, die ebenfalls über Signalleitungen mit der Steuerungseinheit 26 verbunden sind und Ströme erfassen, die zwischen dem jeweiligen Submodul 12 und der jeweiligen Hochspannungswicklung 5 beziehungsweise 6 fließen.

Die Leistungshalbleiterschalter 20, 21, 22 und 23 eines Submoduls 12 können durch zweckmäßige Ansteuersignale, die durch gestrichelte Linien dargestellt sind, von der Steuerungseinheit 26 von einer Trennstellung, in welcher ein Stromfluss über die Leistungshalbleiterschalter unterbrochen ist, in eine Durchgangsstellung, in der ein Stromfluss über die Leistungshalbleiterschalter ermöglicht ist, überführt werden oder umgekehrt von der Durchgangsstellung in die Trennstellung.

Die Betriebsweise der Vorrichtung 1 ist wie folgt: Ist der vom Stromsensor 27 bzw. 28 oder 29 erfasste Strom positiv, sind die Leistungshalbleiterschalter 22 und 23 des Sättigungsschaltkreises 10 geschlossen. Es sei an dieser Stelle vorausgesetzt, dass der Kernschenkel 3 zuvor durch einen von dem Submodul 12 des ersten Sättigungsschaltzweiges zur Hochspannungswicklung 5 fließenden Gleichstrom gesättigt wurde, so dass für die positiven Halbwelle der Wechselspannung der Wechselwiderstand der Hochspannungswicklung 5 kleiner ist als der Wechselwiderstand der Hochspannungswicklung 6. Somit fließt nahezu der gesamte Wechselstrom IAC über den mit I1 bezeichneten Strompfad zur Erde hin ab. In der positiven Halbwelle des Stromes werden daher die Leistungshalbleiterschalter 21 und 22 des Sättigungsschaltzweiges 11 geschlossen, so dass die Gleichspannungsquelle 24 des Sättigungsschaltkreises 11 einen Gleichstrom treibt, der von der Hochspannungswicklung 6 zur Erde 15 fließt. Während der positiven Halbwelle der Wechselspannung im Phasenleiter 16 kann somit der zweite Kernschenkel 4 in der gewünschten Weise gesättigt werden.

Während der negativen Halbwelle, in welcher der vom Sensor 27 oder 30 gemessene Strom negativ ist, fließt der Wechselstrom IAC hingegen im Wesentlichen über die zweite Hochspannungswicklung 6, so dass durch Schließen der Leistungshalbleiterschalter 20 und 23 und Öffnen der Leistungshalbleiterschalter 21 und 22 des Submoduls 12 des ersten Sättigungsschaltzweiges 10 ein Sättigungsgleichstrom erzeugt wird, der von dem Submodul 12 zur ersten Hochspannungswicklung 5 fließt. Durch Schließen von der Leistungshalbleiterschalter 22 und 21 fließt alternativ ein Strom in umgekehrter Richtung. Durch geeignete Schaltung kann die gewünschte Sättigung des Kernschenkels 3 eingestellt werden.

Im Rahmen der Erfindung ist wesentlich, dass die Enden oder mit anderen Worten die Wicklungsenden 7 oder 9 der Hochspannungswicklungen nicht mit dem Hochspannungsanschluss 8 verbunden sind und beim Betrieb der erfindungsgemäßen Vorrichtung 1 auf einem Hochspannungspotential liegen. Die besagten Enden 7, 9 sind im Rahmen der Erfindung mit einem oder jeweils einem Sättigungsschaltzweig 10, 11 verbunden, der an seinem vom der Hochspannungswicklung abgewandten Ende geerdet ist. Die Enden 7, 9 liegen daher auf einem geringeren elektrischen Potential. Somit kann der Abstand zum nicht dargestellten Joch des Kerns geringer sein als bei einer vergleichbaren Vorrichtung des Standes der Technik. Streufeldverluste werden so herabgesetzt.

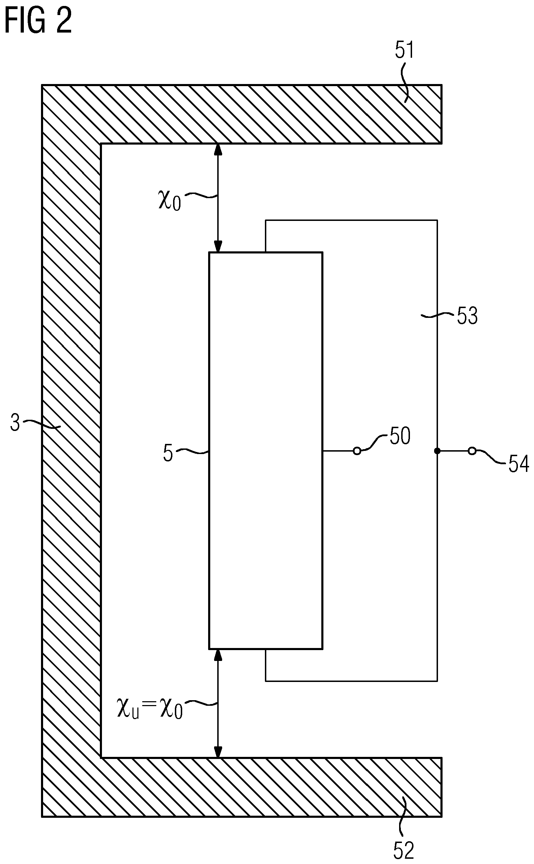

Figur 2 verdeutlicht die oben gemachten Ausführungen und zeigt den ersten Kernschenkel 3 und die erste Hochspannungswicklung 5 mit ihren beiden Wicklungsenden 7 und 9 sowie ihrem Mittenanschluss 50, die hier bereits im Zusammenhang mit Figur 1 erläutert wurden. Die beiden Enden 7, 9 sind über eine in Figur 1 ebenfalls gezeigt Verbindungsleitung 53 miteinander verbunden, wobei ein Anschluss 54 zur Verbindung mit einem Sättigungsschaltzweig dient. Figur 2 verdeutlicht darüber hinaus ein oberes Joch 51 und ein unteres Joch 52 des Kerns, die dem ersten Ende 7 und dem zweiten Ende 9 der Hochspannungswicklung 5 zugewandt sind. Ferner sind der obere Abstand Xₒ zwischen dem ersten Ende 7 der Hochspannungswicklung 5 und dem oberen Joch 51 sowie der untere Abstand Xᵤ zwischen dem zweiten Ende 9 und dem unteren Joch 52 verdeutlicht. In dem gezeigten Ausführungsbeispiel sind die besagten Abstände gleich.

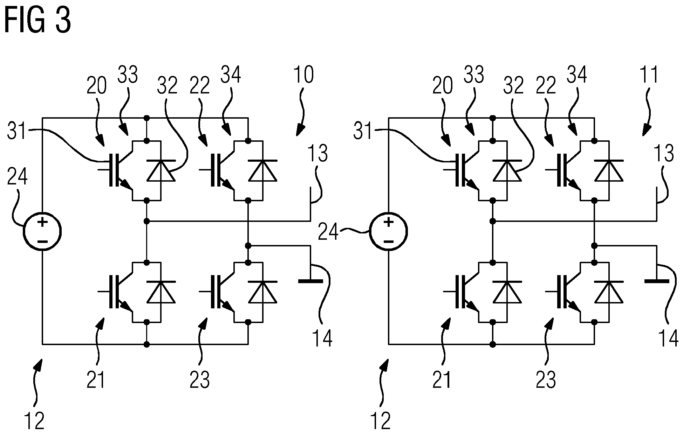

Figur 3 zeigt den Aufbau der Submodule 12 des ersten und zweiten Sättigungsschaltkreises 10, 11 genauer. Es ist erkennbar, dass die Submodule 12 für beide Sättigungsschaltzweige 10 beziehungsweise 11 identisch aufgebaut sind. Es ist ferner erkennbar, dass die Leistungshalbleiterschalter 20, 21, 22, 23 einen so genannten IGBT 31 umfassen, dem eine Freilaufdiode 32 gegensinnig parallelgeschaltet ist. Der Aufbau eines IGBTs mit Freilaufdiode ist grundsätzlich bekannt, so dass an dieser Stelle auf deren Wirkungsweise nicht genauer eingegangen zu werden braucht. Wesentlich ist, dass die Freilaufdiode 22 zum Schutz des IGBTs vor Überspannungen in Rückwärtsrichtung dient. Dabei sind IGBT 31 und Diode 32 in der Regel in einem gemeinsamen Schaltergehäuse untergebracht. IGBT 31 und Freilaufdiode 32 werden hier gemeinsam als Leistungshalbleiter bezeichnet.

Jedes Submodul 12 ist als so genannte Vollbrücke ausgeführt und umfasst einen ersten Reihenschaltungszweig 33 und einen zweiten Reihenschaltungszweig 34 aus jeweils zwei in Reihe geschalteten Leistungshalbleiterschaltern 20, 21 beziehungsweise 22 und 23. Der Potenzialpunkt zwischen den Leistungshalbleiterschaltern 20, 21 des ersten Reihenschaltungszweiges 33 ist mit der ersten Anschlussklemme 13 und der Potenzialpunkt zwischen den Leistungshalbleiterschaltern 22 und 23 des zweiten Reihenschaltungszweiges 34 ist mit der Anschlussklemme 14 des Submoduls 12 verbunden.

Bislang wurde lediglich die Wirkungsweise der Vorrichtung 1, die in Figur 1 gezeigt ist, als "Full Variable Shunt Reactor" (FVSR) verdeutlicht. Darüber hinaus verfügt wie die in Figur 1 gezeigte Vorrichtung auch über ein kapazitiv wirkendes Bauteil, das in Figur 1 als Kondensator 35 ausgeführt ist. Der Kondensator ist einer Ausgleichswicklung 36 parallelgeschaltet, wobei die Ausgleichswicklung aus zwei Teilzusatzwicklungen 37 und 38 besteht, die zueinander in Reihe geschaltet sind. Die Teilzusatzwicklung 37 ist induktiv mit der ersten Hochspannungswicklung 5 und die zweite Teilzusatzwicklung 38 mit der zweiten Hochspannungswicklung 6 induktiv gekoppelt. Dabei sind die Hochspannungswicklungen 5 bzw. 6 und die jeweilige Teilzusatzwicklung 37 bzw. 38 konzentrisch zueinander angeordnet, wobei sie den gleichen Kernabschnitt 3 bzw. 4 des ansonsten nicht weiter verdeutlichten Kerns umschließen.

In Figur 1 ist lediglich eine Ausgleichswicklung 36 für die dort gezeigte Phase verdeutlicht. In dem Tank 2 sind jedoch für die anderen Phasen weitere Ausgleichswicklungen vorgesehen, die identisch aufgebaut und auf gleiche Art und Weise mit dem Kondensator 35 verschaltet sind. Dabei sind die Ausgleichswicklungen 36 der unterschiedlichen Phasen miteinander in einer Dreiecksschaltung verbunden. Diese Dreiecksschaltung ist durch die Pfeile 39a bzw. 39b angedeutet. In dem Parallelzweig der Ausgleichswicklung, in welcher der Kondensator 35 angeordnet ist, ist ferner ein Schalter 40 schematisch dargestellt, der in dem gezeigten Ausführungsbeispiel zwei gegensinnig parallel geschaltete Thyristoren umfasst. Mit Hilfe des elektronischen Schalters 40 kann der Kondensator 35 der Zusatzwicklung 36 parallelgeschaltet oder die Wirkung des kapazitiv wirkenden Bauteils 35 unterdrückt werden.

Der Kondensator 35 ist in Figur 1 als einzelner Kondensator dargestellt, der außerhalb des Tanks 2 angeordnet ist. Der Kondensator umfasst jedoch eine Anzahl von in Reihe oder parallel zueinander angeordneten Kondensatoren und kann daher auch als Kondensatorbatterie bezeichnet werden. Dabei ist die Anzahl der parallel oder in Reihe geschalteten Kondensatoren von den jeweiligen Anforderungen abhängig, wobei die kapazitive Wirkung erhöht oder herabgesetzt werden kann.

Der Kondensator oder mit anderen Worten die Kondensatorbatterie 35 ist wie der Schalter außerhalb des Tanks 2 angeordnet. Um eine elektrische Verbindung zwischen der Ausgleichswicklung 36, die in dem Tank 2 angeordnet ist, zu ermöglichen, sind wieder zweckmäßige Durchführungen 8 vorgesehen, die ein spannungsfestes Hindurchführen der Hochspannungsleitung durch die Tankwand auf Erdpotenzial ermöglicht.

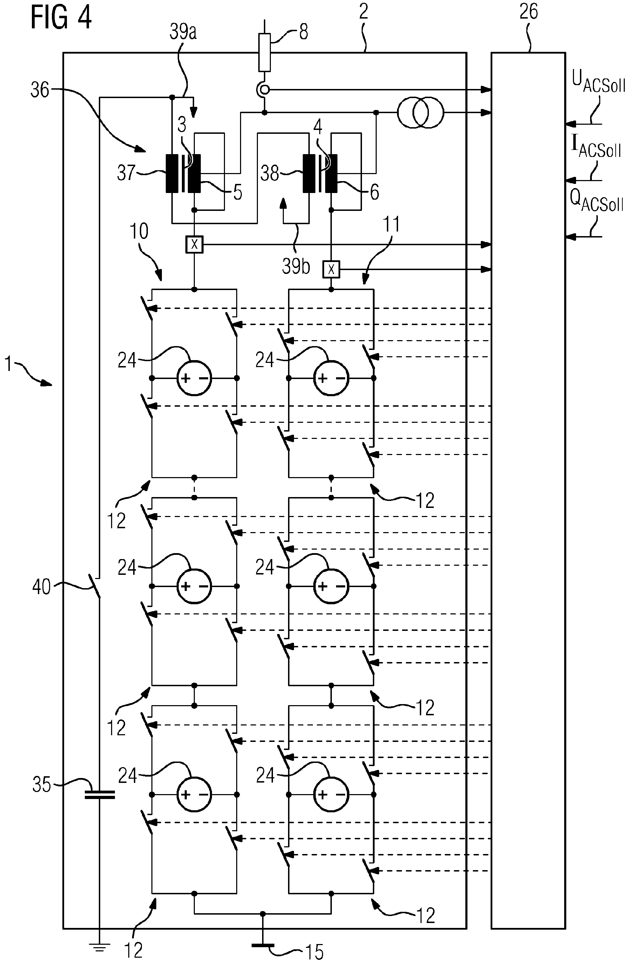

Figur 4 zeigt ein weiteres Ausführungsbeispiel der erfindungsgemäßen Vorrichtung 1, wobei aus Gründen der Übersicht lediglich Bauteile zur Verbindung mit einer Phase des Hochspannungsnetzes 17 gezeigt sind. In dem gezeigten Ausführungsbeispiel umfasst jeder Sättigungszweig 10 bzw. 11 eine Reihenschaltung aus mehreren Submodulen 12, die von der Steuerungseinheit 26 entweder alle identisch oder unterschiedlich angesteuert werden, so dass die Gleichspannung zum Erzeugen der Sättigung der Kernschenkel 3, 4 dienenden Gleichstroms den jeweiligen Anforderungen entsprechend skalierbar ist. Die Zusatzwicklung 36 umfasst wieder 2 Teilzusatzwicklungen 37 und 38, die miteinander in Reihe geschaltet sind, wobei die gezeigte Ausgleichswicklung 36 wie durch die Pfeile 39a und 39b angedeutet, mit den Ausgleichswicklungen der anderen Phasen eine Dreiecksschaltung ausbildet. Mit anderen Worten ist die Teilzusatzwicklung 37 an ihrem Ende 39a mit einer Teilzusatzwicklung einer hier nicht gezeigten zweiten Phase verbunden. Entsprechendes gilt für die Teilzusatzwicklung 38, die an ihrem Ende 39b mit einer Teilzusatzwicklung einer anderen Phase verbunden ist, die ebenfalls nicht gezeigt ist. Der Potenzialpunkt zwischen zwei Ausgleichswicklungen 36 unterschiedlicher Phase ist über den Schalter 40 wieder mit einem Pol eines Kondensators 35 bzw. einer Kondensatorbatterie verbunden, wobei jeder Kondensator 35 an seiner vom von der Ausgleichswicklung 36 und dem Schalter 40 abgewandten Seite mit dem Erdpotenzial 15 verbunden ist. Dabei sind der Kondensator 35 sowie der Schalter 40 bei dem in Figur 4 dargestellten Ausführungsbeispiel der Erfindung innerhalb des Tanks 2 der Vorrichtung 1 angeordnet. Auf diese Art und Weise ist ein besonders platzsparende Vorrichtung 1 bereitgestellt. Darüber hinaus ist der Aufwand Hochspannungsleitungen aus dem Tank 2 herauszuführen gegen-über dem in Figur 1 gezeigten Ausführungsbeispiel vermieden.

## Patentansprüche

1. Vorrichtung (1) zur Blindleistungskompensation in einem wenigstens einen Phasenleiter (16,18,19) aufweisenden Hochspannungsnetz (17), wobei die Vorrichtung (1) wenigstens einen Hochspannungsanschluss (8), der zur Verbindung mit jeweils einem genannten Phasenleiter (16) eingerichtet ist, aufweist, wobei als Teil der Vorrichtung (1) für jeden genannten Hochspannungsanschluss (8)
- ein erster und ein zweiter Kernabschnitt (3,4), die Teil eines geschlossenen Magnetkreises der Vorrichtung sind,
- eine erste Hochspannungswicklung (5), die den ersten Kernabschnitt umschließt,
- eine zweite Hochspannungswicklung, die den zweiten Kernabschnitt umschließt und parallel zur ersten Hochspannungswicklung geschaltet ist,
- wenigstens ein Sättigungsschaltzweig (10,11), der zum Sättigen wenigstens eines genannten Kernabschnittes (3,4) eingerichtet ist und ansteuerbare Leistungshalbleiterschalter (20,21,22,23) aufweist und
- eine Steuerungseinheit (26) zum Ansteuern der Leistungshalbleiterschalter (20,21,22,23) vorgesehen sind,
**dadurch gekennzeichnet, dass**
wenigstens eine genannte Hochspannungswicklung einen Mittenanschluss (50) aufweist und an ihren Wicklungsenden (7, 9) mit dem Sättigungsschaltzweig und über den Mittenanschluss mit dem Hochspannungsanschluss (8) verbunden ist.

2. Vorrichtung (1) nach Anspruch 1,
**dadurch gekennzeichnet, dass**
der erste und der zweite Kernabschnitt über ein oberes und ein unteres Joch (51,52) des Magnetkreises miteinander verbunden sind, wobei
die Abstände (Xₒ, Xᵤ) zwischen dem oberen bzw. unteren Joch und dem oberen beziehungsweise unteren Wicklungsende (7,9) der mit Mittenanschluss ausgerüsteten Hochspannungswicklung(en) im Bereich von 1 bis 20 cm liegen.

3. Vorrichtung (1) nach einem der vorhergehenden Ansprüche,
**dadurch gekennzeichnet, dass**
jede Hochspannungswicklung (5,6) und jeder Sättigungsschaltzweig (10,11) in einem mit einem Isolierfluid befüllten Tank (2) der Vorrichtung angeordnet sind.

4. Vorrichtung (1) nach einem der vorhergehenden Ansprüche,
**dadurch gekennzeichnet, dass**
jeder Sättigungsschaltzweig (10,11) wenigstens ein zweipoliges Submodul (12) mit einer Brückenschaltung aufweist, die über Leistungshalbleiterschalter (20,21,22,23) und eine Gleichspannungsquelle (24) verfügt, so dass je nach Ansteuerung der Leistungshalbleiterschalter (20,21,22,23) die Gleichspannungsquelle entweder in Reihe zu wenigstens einer Hochspannungswicklung (10,11) schaltbar oder überbrückbar ist.

5. Vorrichtung (1) nach Anspruch 4,
**dadurch gekennzeichnet, dass**
jedes Submodul (12) eine Vollbrückenschaltung ausbildet, die einen ersten Reihenschaltungszweig (33) und einen zweiten Reihenschaltungszweig (34) aufweist, die der Gleichspannungsquelle (24) jeweils parallel geschaltet sind, jeder Reihenschaltungszweig (33,34) eine Reihenschaltung aus zwei Leistungshalbleiterschaltern (20,21,22,23) aufweist, wobei der Potenzialpunkt zwischen den Leistungshalbleiterschaltern (20,21) des ersten Reihenschaltungszweigs (33) mit einer ersten Anschlussklemme (13) des Submoduls (12) und der Potenzialpunkt zwischen den Leistungshalbleiterschaltern (22,23) des zweiten Reihenschaltungszweigs (34) mit der zweiten Anschlussklemme (14) des Submoduls (12) verbunden ist.

6. Vorrichtung (1) nach Anspruch 4 oder 5,
**dadurch gekennzeichnet, dass**
jeder Leistungshalbleiterschalter (20,21,22,23) ein IGBT (31) ist mit gegensinnig parallel geschalteter Freilaufdiode (32), ein GTO oder ein Transistorschalter ist.

7. Vorrichtung (1) nach einem der Ansprüche 4 bis 6,
**dadurch gekennzeichnet, dass**
jede Gleichspannungsquelle (24) einen Energiespeicher umfasst.

8. Vorrichtung (1) nach Anspruch 7,
**dadurch gekennzeichnet, dass**
der Energiespeicher an ein Versorgungsnetz anschließbar ist.

9. Vorrichtung (1) nach einem der vorhergehenden Ansprüche,
**dadurch gekennzeichnet, dass** als Teil der Vorrichtung (1) Ausgleichswicklungen (36) vorgesehen sind, die induktiv mit den Hochspannungswicklungen (5,6) gekoppelt sind, wobei die Ausgleichswicklungen (36) mit wenigstens einem kapazitiv wirkenden Bauteil (35) der Vorrichtung (1) verschaltet sind.

10. Vorrichtung (1) nach Anspruch 9,
**dadurch gekennzeichnet, dass**
das kapazitiv wirkende Bauteil Kondensatoren (46) aufweist.

## Claims

1. Device (1) for reactive power compensation in a high-voltage network (17), which has at least one phase conductor (16,18,19), wherein the device (1) has at least one high-voltage connection (8) which is set up to connect to a specified phase conductor (16) in each case, wherein as part of the device (1) for each specified high-voltage connection (8)
- a first and a second core section (3,4) which are part of a closed magnet circuit of the device,
- a first high-voltage winding (5) which encloses the first core section,
- a second high-voltage winding which encloses the second core section and is connected in parallel to the first high-voltage winding,
- at least one saturation switching branch (10,11) which is set up to saturate at least one specified core section (3,4) and has controllable power semiconductor switches (20,21,22,23) and
- a control unit (26) for controlling the power semiconductor switches (20,21,22,23) are provided,
**characterized in that**
at least one specified high-voltage winding has a central connection (50) and is connected at its winding ends (7, 9) to the saturation switching branch and, via the central connection, to the high-voltage connection (8).

2. Device (1) according to Claim 1,
**characterized in that**
the first and the second core section are connected to one another via an upper and a lower yoke (51,52) of the magnet circuit, wherein the distances (Xₒ, Xᵤ) between the upper or lower yoke and the upper or lower winding end (7,9) of the high-voltage winding(s) equipped with a central connection are in the range of 1 to 20 cm.

3. Device (1) according to either one of the preceding claims,
**characterized in that**
each high-voltage winding (5,6) and each saturation switching branch (10,11) are arranged in a tank (2), filled with an insulating fluid, of the device.

4. Device (1) according to one of the preceding claims,
**characterized in that**
each saturation switching branch (10,11) has at least one two-pole submodule (12) with a bridge circuit which possesses power semiconductor switches (20,21,22,23) and a direct voltage source (24), so that the direct voltage source can either be connected in series to at least one high-voltage winding (10,11) or bridged depending on the control of the power semiconductor switches (20,21,22,23) .

5. Device (1) according to Claim 4,
**characterized in that**
each submodule (12) forms a full bridge circuit which has a first series connection branch (33) and a second series connection branch (34) which are each connected in parallel to the direct voltage source (24), each series connection branch (33,34) has a series connection made up of two power semiconductor switches (20,21,22,23), wherein the potential point between the power semiconductor switches (20,21) of the first series connection branch (33) is connected to a first connecting terminal (13) of the submodule (12) and the potential point between the power semiconductor switches (22,23) of the second series connection branch (34) is connected to the second connecting terminal (14) of the submodule (12).

6. Device (1) according to Claim 4 or 5,
**characterized in that**
each power semiconductor switch (20,21,22,23) is an IGBT (31) with a free-wheeling diode (32) connected in parallel in the opposite direction, a GTO or a transistor switch.

7. Device (1) according to one of Claims 4 to 6,
**characterized in that**
each direct voltage source (24) comprises an energy storage device.

8. Device (1) according to Claim 7,
**characterized in that**
the energy storage device can be connected to a supply network.

9. Device (1) according to one of the preceding claims,
**characterized in that**
as part of the device (1) stabilizing windings (36) are provided which are coupled inductively to the high-voltage windings (5,6), wherein the stabilizing windings (36) are interconnected with at least one capacitively acting component (35) of the device (1).

10. Device (1) according to Claim 9,
**characterized in that**
the capacitively acting component has capacitors (46).

## Revendications

1. Dispositif (1) de compensation de la puissance réactive dans un réseau (17) à haute tension ayant au moins un conducteur (16, 18, 19) de phase, dans lequel le dispositif (1) a au moins une borne (8) de haute tension qui est agencée pour la liaison avec respectivement un dit conducteur (16) de phase, dans lequel, comme partie du dispositif (1), pour chaque dite borne (8) de haute tension, sont prévus
- une première et une deuxième parties (3, 4) de noyau, qui font partie d'un circuit magnétique fermé du dispositif,
- un premier enroulement (5) en haute tension, qui entoure la première partie de noyau,
- un deuxième enroulement en haute tension, qui entoure la deuxième partie de noyau et qui est monté en parallèle avec le premier enroulement en haute tension,
- au moins une branche (10, 11) de coupure de saturation, qui est agencée pour la saturation d'au moins une dite partie (3, 4) de noyau et qui a des interrupteurs (20, 21, 22, 23) à semi-conducteur de puissance pouvant être commandés, et
- une unité (26) de commande pour la commande des interrupteurs (20, 21, 22, 23) à semi-conducteur de puissance,
car a c t é r i s é en c e que
au moins un dit enroulement en haute tension a une borne (50) médiane et est relié à ses extrémités (7, 9) d'enroulement à la branche de coupure de saturation et, par la borne médiane, à la borne (8) de haute tension.

2. Dispositif (1) suivant la revendication 1,
**caractérisé en ce que**
les première et deuxième parties de noyau sont reliées entre elles par une culasse (51) supérieure et une culasse (52) inférieure de circuit magnétique, dans lequel
les distances (x₀, xᵤ) entre la culasse supérieure ou la culasse inférieure et l'extrémité (7, 9) supérieure ou respectivement inférieure de l'enroulement ou des enroulements en haute tension, équipé(s) de la borne médiane, sont dans la plage de 1 à 20 cm.

3. Dispositif (1) suivant l'une des revendications précédentes,
**caractérisé en ce que**
chaque enroulement (5, 6) en haute tension et chaque branche (10, 11) de coupure de saturation sont montés dans une cuve (2), remplie d'un fluide isolant, du dispositif.

4. Dispositif (1) suivant l'une des revendications précédentes,
**caractérisé en ce que**
chaque branche (10, 11) de coupure de saturation a au moins un sous-module (12) bipolaire, ayant un circuit en pont, qui y dispose d'un interrupteur (20, 21, 22, 23) à semi-conducteur de puissance et d'une source (24) de tension continue, de sorte que suivant la commande des interrupteurs (20, 21, 22, 23) à semi-conducteur de puissance, la source de tension continue peut être soit montée en série avec au moins un enroulement (10, 11) à haute tension, soit être shuntée.

5. Dispositif (1) suivant la revendication 4,
**caractérisé en ce que**
chaque sous-module (12) constitue un circuit en pont complet, qui a une première branche (33) de circuit série et une deuxième branche (34) de circuit série, qui sont montées respectivement en parallèle avec la source (24) de tension continue, chaque branche (33, 34) de circuit série a un circuit série composé de deux interrupteurs (20, 21, 22, 23) à semi-conducteur de puissance, le point de potentiel entre les interrupteurs (20, 21) à semi-conducteur de puissance de la première branche (33) de circuit série étant relié à une première borne (13) de connexion du sous-module (12) et le point de potentiel entre les interrupteurs (22, 23) à semi-conducteur de puissance de la deuxième branche (34) de circuit série étant relié à la deuxième borne (14) de connexion du sous-module (12).

6. Dispositif (1) suivant la revendication 4 ou 5,
car a c t é r i s é en c e que
chaque interrupteur (20, 21, 22, 23) à semi-conducteur de puissance est un IGBT (31) ayant une diode (32) de roue libre montée en parallèle en sens contraire, un GTO ou un interrupteur à transistors.

7. Dispositif (1) suivant l'une des revendications 4 à 6,
car a c t é r i s é en c e que
chaque source (24) de tension continue comprend un accumulateur d'énergie.

8. Dispositif (1) suivant la revendication 7,
car a c t é r i s é en c e que
l'accumulateur d'énergie peut être raccordé à un réseau d'alimentation.

9. Dispositif (1) suivant l'une des revendications précédentes,
**caractérisé en ce qu'**il est prévu, comme partie du dispositif (1), des enroulements (36) de compensation, qui sont couplés inductivement avec les enroulements (5, 6) en haute tension,
dans lequel les enroulements (36) de compensation sont reliés à au moins un composant (35) à effet capacitif du dispositif (1).

10. Dispositif (1) suivant la revendication 9,
car a c t é r i s é en c e que
le composant à effet capacitif comporte des condensateurs (46).
